# EUROPEAN PATENT SPECIFICATION

(11) **EP 3 681 845 B1**
(45) Date of publication and mention of the grant of the patent: **20.03.2024**
(21) Application number: 18774088.1
(22) Date of filing: 12.09.2018
(51) Int. Cl.: C02F 11/10, C02F 11/12, C10K 1/02, C10K 1/10, C10J 3/46, C10J 3/54, C02F 103/20, C10J 3/84, C02F 11/13

(54) **NUTRIENT AND ENERGY RECOVERY FROM SEWAGE SLUDGE AND ANIMAL MANURE**
NÄHRSTOFF UND ENERGIERÜCKGEWINNUNG AUS ABWASSERSCHLAMM UND DÜNGEN
RÉCUPÉRATION D'ÉNERGIE ET NUTRIMENTS À PARTIR DE BOUES D'EAU RÉSIDUAIRE ET LISIER

(30) Priority: 12.09.2017 FI 20175808
(43) Date of publication of application: 22.07.2020
(73) Proprietor: Teknologian Tutkimuskeskus VTT Oy, 02150 Espoo (FI)
(72) Inventor: NIEMINEN, Matti, 02044 VTT (FI)
(74) Representative: Laine IP Oy
(86) International application number: PCT/FI2018/050648
(87) International publication number: WO 2019/053327

(56) References cited:
- EP-A1- 1 572 841
- WO-A1-2006/031757
- US-A1- 2016 168 492
- US-B1- 6 548 197

## Description

### FIELD

The present invention relates to processing of sewage sludge and animal manure in a safe manner for simultaneous recovery of nutrients and energy from such.

### BACKGROUND

Sewage sludge and animal manure are difficult materials to process so that the environmental impacts are minimized. In addition, both of these materials contain high concentration of nutrients, especially phosphorus and nitrogen, which are most harmful contaminants of water system causing serious eutrophication of lakes and seas.

Typically, sewage sludge is processed in several different ways. One of the most common technologies in developed countries is anaerobic digestion producing methane from sludge. However, the digestion residue is still sludge containing most of nitrogen and phosphorus as well as roughly half of organic material compared to original sludge. This residue can also be processed with this invention. Nowadays most of the digestion residue is used as an aqueous fertilizer but this is not accepted everywhere. The aqueous digestion residue contains a lot of water leading easily contamination of water system with high nutrient containing material. Another problem is heavy metals of sewage sludge causing contamination of soil. In addition, residues of medicines and dangerous microbes causing serious diseases are not destroyed in anaerobic digestion (AD) and these are also seen as a high risk. Another way to process sewage sludge is composting. However, the result of composting has the same problems as the residue of AD excluding high water content.

For example, WO 2014/094162 describes recovery of nutrients from sewage sludge or manure and treated in one or more solid-liquid separation units, ammonia stripping device, and gas scrubbing unit. Ammonia is stripped from the liquid portion and converted into ammonium salt solution. Such solution may be used as a fertilizer product or may be concentrated to produce brines. However, direct stripping is efficient only for removal of ammonia, not for example organic nitrogen.

US 2014/0033776 relates to organic and nutrient recovery from anaerobic digester residues, and describes separation of solids from liquids in the sludge and drying them. The solids may be dried to produce flakes and pellets. Ammonia in the liquid is recovered and used to produce a concentrated acidic ammonium salt solution.

CN 105670656 on the other hand discloses a circulating fluidized bed pyrolysis gasification furnace which comprises for example a sludge storage hopper, a furnace body, ash closeness and cooling tower, a material distributor, furnace grate, a gasification area and a combustion area. The system comprises (A) dehydrating sludge, where the sludge containing moisture content to 60%, (B) drying sludge, crushing, where the sludge is having moisture content of 35%, crushing dried sludge into powder having particle size of 0-15 mm; (C) transferring crushed powder sludge into circulating fluidized bed pyrolysis and carrying out thermal gasification process.

Soerensen *et al.* (2015) discloses a study consisting drying process and thermal gasification of waste activated sludge followed by extraction of phosphorus from the ashes.

Lately, more attention has been focused on thermal treatment of sewage sludge. The most usual way is to incinerate the sludge in order to evaporate water, eliminate medicine residues and other harmful organic contaminants and to reduce the volume. However, in incineration ammonia is not only lost but it forms nitrous oxides, which have to be controlled with NOx removal equipment. In addition, phosphorus is practically completely oxidized to form, which is very difficult to utilize as a fertilizer. Incineration is more seen as a way to destroy sewage sludge, not to recover nutrients or energy. In practice this means that incineration operation is almost completely based on gate fee, not on income from products. Incineration does not support the aim to develop society towards circular economy. Ammonia recovery from sewage sludge (or residue from AD) has been developed and is already even commercially available, but this does not solve the whole problem, only a small part of it. Gasification of dried sewage sludge has also been developed and technology is commercially available. However, the complete nutrient recovery (including recovery of phosphorus and ammonia) is not developed and the gasification is only used for conversion of organic matter to gaseous fuel. The use of phosphorus rich ashes as a fertilizer has been developed but not ammonium recovery from gasification product gas. WO 2006/031757 A1, EP 1 572 841 A1, US 2016/168492 A1 and US 6 548 197 B1 disclose methods for recovering nutrients and heat from sewage sludge or animal manure.

Therefore, there is a need for new process concepts and technologies for processing of sewage sludge and animal manure in order to recover the nutrients and energy, and thus utilize the organic fraction in an efficient and safe manner.

### SUMMARY OF THE INVENTION

The invention is defined by the features of the independent claim. Some specific embodiments are defined in the dependent claims.

According to an aspect of the present invention, there is provided a method for recovering nutrients and energy from sewage sludge and animal manure.

According to another aspect of the present invention, the method combines dewatering of sewage sludge and/or animal manure, thermal gasification of the dewatered fraction, and ammonia, phosphorus, heat and cleaned gas recovery from the gasified fractions.

According to a further aspect of the present invention, a fertilizer is produced from the recovered ammonia and phosphorus with a desired and adjustable N/P-ratio.

These and other aspects, together with the advantages thereof over known solutions are achieved by the present invention, as hereinafter described and claimed.

The method of the present invention is mainly characterized by what is stated in the characterizing part of claim 1.

Considerable advantages are obtained by means of the invention. For example one benefit of this invention is practically complete utilization of sewage sludge or animal manure in one process concept including almost complete nitrogen recovery (as ammonia), phosphorus recovery, energy recovery from organic matter and finally production of tailored fertilizer from ammonia and phosphorus. In addition, the concept is partly distributed so that drying, thermal gasification and phosphorus and ammonia recovery is preferably done at smaller distributed local unit nearby production of sewage sludge or animal manure and the final fertilizer production is done in a centralized plant. This enables avoiding transportation of large volume of wet organic matter containing raw materials. Preferably, only concentrated ammonia and phosphorus are transported thus having significant positive impact on logistics and cost of transportation.

Next, the present technology will be described more closely with reference to certain embodiments.

### EMBODIMENTS

The present technology provides utilization of sewage sludge and/or animal manure in one process concept including close to complete nitrogen (as e.g. ammonia) recovery, phosphorus recovery and energy recovery from such organic feedstock matter and production of a tailored fertilizer from the recovered ammonia and phosphorus.

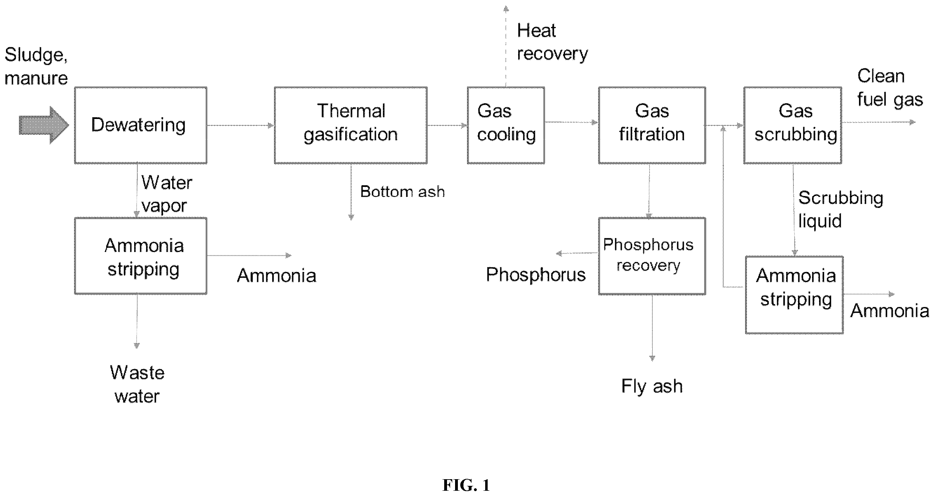

FIGURE 1 is a process diagram describing the method of the present invention.

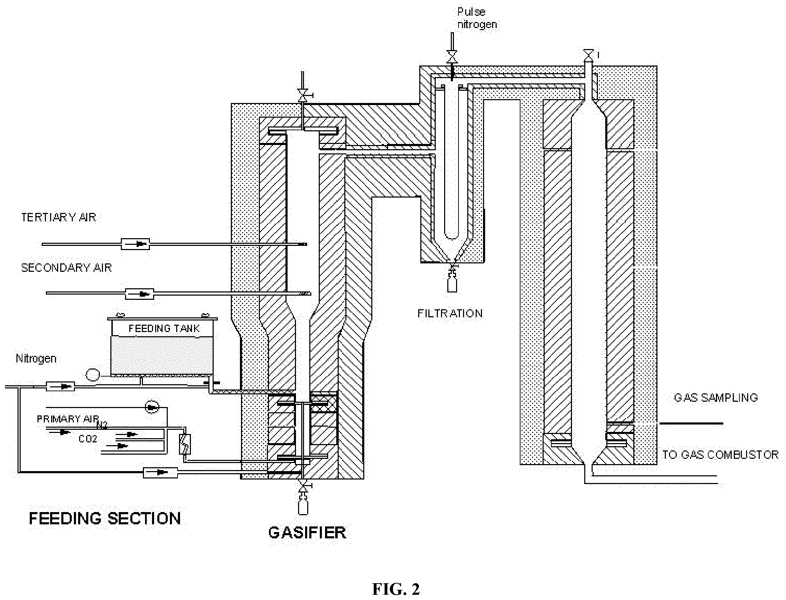

FIGURE 2 is a schematic figure showing one possible bench-scale fluidized bed gasification test rig.
FIGURE 3 is a diagram showing the carbon conversion and air ratio in a bench-scale gasification tests using dried sludge as a feedstock.
FIGURE 4 is a diagram showing carbon conversion and air ratio in a bench-scale gasification test using mixture of dried sludge and wood as a feedstock.
FIGURE 5 is a schematic figure showing one possible circulating fluidized-bed (CFB) gasification test rig.

The present invention is based on coupling of unit operations comprising: 1) dewatering of sewage sludge and/or animal manure, 2) thermal gasification of the dewatered sludge/manure feedstock and 3) recovery of nitrogen, phosphorus and cleaned gas from the gasified fractions.

Thus, one embodiment of the present invention is a method for recovering nutrients and energy from a sewage sludge and/or animal manure feedstock, wherein the method includes the steps of:
- dewatering of the sewage sludge and/or animal manure,
- thermal gasification of the dewatered sewage sludge and/or animal manure to produce gaseous and solid fractions comprising phosphorus and nitrogen as ammonia,
- cooling of the gas and recovering heat, and
- cleaning of the gas by filtration and scrubbing to recover phosphorus, nitrogen as ammonia and cleaned fuel gas for further utilization.

Thus, one important aspect of the present invention is to recover phosphorus, nitrogen as ammonia and energy by one combined process concept.

In one embodiment of the present invention, the dewatering of the sewage sludge and/or animal manure is carried out into water content below 25 wt-%, for example by belt dryer with heated air.

In the present invention, the evaporated water from the dewatering step is condensed and stripped to recover nitrogen as ammonia. Thus, dewatering equipment enabling ammonia recovery in this step improves the total yield of nitrogen recovery. In other words, nitrogen contained in the sewage sludge and animal manure forms ammonia, which is then recovered.

In one embodiment of the present invention, the thermal gasification is carried out by a fluidized bed gasification process, such as bubbling fluidized bed gasification (BFB) or circulating fluidized bed gasification (CFB).

In the present invention, the thermal gasification is carried out at temperature of 600-900 °C, more preferably 700-850 °C, after which the produced gas is cooled down to temperature of 300-500 °C, more preferably 350-450 °C, after which the cooled gas is filtrated and scrubbed for recovery of phosphorus and nitrogen. The gas cooling leads to heat recovery, which can be further utilized and recycled back to the process to the dewatering step or can be used for other purposes.

In the present context such thermal gasification and gas filtration steps provide ash fractions containing the phosphorus, which is utilized as such or recovered from the ash by means of hydrometallurgy or extraction, or by other means. In one embodiment of the present invention, the ash fraction containing the phosphorus is transported as such to a fertilizer production unit.

In one more specified embodiment of the present invention, the phosphorus is recovered from bottom ash generated in the thermal gasification step and from fly ash generated in the gas filtration step.

Furthermore, the produced fuel gas is cleaned by means of scrubbing, preferably with a liquid containing formic acid, providing clean fuel gas and a scrubbing liquid, from which ammonia is stripped. In addition of ammonia recovery, these steps enable efficient cleaning of the fuel gas, whereby the fuel gas can be used as a fuel, not as a waste. This has a significant economic benefit.

In addition, the present method comprises collecting the other solid products than phosphorus from the thermal gasification for further processing and utilization or for disposal as a safe inert residue.

In a preferred embodiment of the present invention, the method is capable of recovering at least 90%, preferably at least 95%, and most suitably at least 98% of the ammonia contained in the produced gasification gas and separable in the dewatering and thermal gasification steps. Thereby, the present invention enables in practice almost complete utilization of sludge and manure with almost complete recovery of ammonia for further use, for example in fertilizer industry.

Another parameter verifying that the present method was successful is the carbon conversion. According to the invention the total carbon conversion (containing gas and tars) in the present method is at least 80%, more preferably at least 90%.

The present invention provides also logistical advantage over the known solutions, since only the recovered ammonia and phosphorus (e.g. contained in the ash) needs to be transported for further use.

In one embodiment of the present invention, the recovered ammonia and phosphorus are transported into a centralized fertilizer production unit, where a tailored fertilizer having a desired N/P-ratio can be produced. Typical solutions provide fertilizers with for example too high phosphorus content compared to nitrogen. Herein the N/P-ratio can be adjusted depending on the end-use requirements of the fertilizer.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. While the forgoing examples are illustrative of the principles of the present invention in one or more particular applications, it will be apparent to those of ordinary skill in the art that numerous modifications in form, usage and details of implementation can be made without departing from the scope of the claims. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

The present invention is applicable in recovery of nutrients and energy from sewage sludge and animal manure. The present invention thus provides an effective way to utilize ammonia and phosphorus contained in sewage sludge and animal manure and to avoid contamination of environment with such materials. In addition, the present invention provides production of tailored fertilizers from the recovered ammonia and phosphorus with desired and adjustable N/P-ratio.

### EXAMPLES

### Example 1. Dewatering of the sewage sludge and animal manure

Mechanically dried sludge has to be dried further in order to reduce the water content suitable for gasification. This drying can be done for example by belt dryer developed for sludge drying. Other type of thermal dryers can also be used. If the belt dryer is applied, during drying some ammonia will also be evaporated simultaneously with water. This ammonia can be recovered by condensing evaporated components and by recovering ammonia from water by stripping.

### Example 2. Bench-scale bubbling fluidized bed gasification

The gasification experiments were carried out with the bench-scale test facility illustrated in 2. The test facility consisted of an atmospheric bubbling fluidised bed gasifier and a ceramic filter. The bed diameter of the reactor was 63 mm and freeboard diameter 104 mm. Electric heaters were used to warm up the reactor, the freeboard and the filter before testing and to compensate heat losses during testing. The feedstock was fed from a live-bottom hopper into fluidised bed by two screw feeders. The feeding point was located close to the air distributor. Preheated primary air was fed into the reactor from the bottom through multiorifice plate distributor. A small amount of purging nitrogen was introduced through the feeding screw and through the bed material removal pipe located in the center of the air distributor. The fine particles elutriated from the reactor were collected by the ceramic filter.

Before each test the gasifier was cleaned from possible earlier deposits. The test rig including bed was then preheated in nitrogen atmosphere to the target process temperature before the fuel feeding was started. The measurements were started after the operation temperature was reached and the process was attained steady operation state.

### Feedstocks

Two feedstocks were used in the bench-scale gasification tests. 4 tests were carried out using mixture of digested and thermally dried sludge (50 wt-%) and wood chips (50 wt-%). Digested and thermally dried sludge was used without any additional fuel in 9 tests.

Digested and thermally dried sludge was delivered to VTT in granulated form. The particle size was too large for bench-scale gasification tests so the dried sludge was crushed before tests.

The composition of every thermally dried sludge lot received at VTT was analysed. The main components of the different sludge lots are presented in Table 1. Thermally dried sludge was relatively of uniform quality and homogeneous, but its moisture varied in some degree. The difference in moisture content may be due to varying atmospheric humidity (dried sludge absorbs moisture) in addition to process variation. The most significant features of dried sludge were high ash content, approximately 50% and low carbon content, below 30%, causing the low energy content of the feedstock

**Table 1. The composition of thermally dried sludge in different lots.**

| **Lot number** | **Dried sludge 1** | **Dried sludge 2** | **Dried sludge 3** | **Dried sludge** 3 **and wood chips 50 %/ 50%** |
|---|---|---|---|---|
| Used | Test 1 | Tests 2 - 8, 10 | Test 9 | Tests 11-14 |
| Moisture content, wt-% | 5.0 | 7.3 | 9.7 | 9.4 |
| Wt-% (d.b.) | | | | |
| Volatile matter | 47.2 | 51.0 | 50.2 | 64.0 |
| Ash | 54.7 | 49.2 | 45.8 | 20.9 |
| Wt-% (d.b.) | | | | |
| C | 23.5 | 25.3 | 26.6 | 40.6 |
| H | 3.3 | 3.0 | 3.6 | 4.9 |
| N | 2.9 | 2.1 | 2.7 | 1.6 |
| S | 0.68 | 0.63 | 1.00 | 0.45 |
| O (as difference) | 14.9 | 19.8 | 20.3 | 52.4 |

The nitrogen and sulphur contents of the thermally dried sludge were remarkably high compared to the other fuels. This may easily lead to high ammonia and hydrogen sulphide concentrations in gasification product gas. The concentrations of the problematic elements are diluted if sewage sludge is mixed with wood, see Table 1 (dried sludge and wood chip mixture). Compared to sludge as such the mixture was more close to typical biofuels.

Several elements were analysed from lot 1, and the results are presented in Table 2. Remarkably high iron content of the sludge (19.4 weight-%) results from the use of iron salt as a chemical coagulant in precipitation process of wastewater treatment. Iron compounds often have high agglomeration and sintering tendency. The aluminium content was relatively high too (1.9 weight-%) indicating the content of aluminium in the chemical coagulant. Phosphorus content was high because in wastewater treatment phosphorus, as well as nitrogen, are precipitated from wastewater as completely as possible. Heavy metal content of the dried sludge did not differ significantly from the average Finnish sewage sludge (Table 2).

The approximate chlorine content of the sludge was low, only 0.03 weight-% (d.b.) analysed by X-ray fluorescence (XRF).

The gasification reactivity and sintering tendency of the dried sewage sludge was studied by an atmospheric thermobalance. No sintering was observed despite of the high iron content. Most of the volatile matter of the sludge vaporised between temperatures 250 C and 500 °C.

**Table 2. Trace elements in dried sewage sludge (lot 1).**

| **Element** | **Dried sludge 1, mg/kg (d.b.)** | **Average Finnish sewage sludge⁵, mg/kg (d.b.)** |
|---|---|---|
| Aluminium, Al¹ | 19000 | |
| Calcium, Ca¹ | 17000 | |
| Cobalt, Co² | 9.7 | |
| Chromium, Cr¹ | 52 | 84 |
| Copper, Cu¹ | 190 | 290 |
| Iron, Fe¹ | 194000 | |
| Potassium, K¹ | 3300 | |
| Magnesium, Mg¹ | 3200 | |
| Sodium, Na¹ | 2700 | |
| Nickel, Ni² | 45 | 34 |
| Phosphorus, P¹ | 35000 | |
| Silicon, Si³ | 34000 | |
| Titanium, Ti¹ | 1700 | |
| Vanadium, V¹ | 32 | |
| Zinc, Zn¹ | 420 | 606 |
| Tin, Sn ² | 22 | |
| Antimony, Sb² | 3.4 | |
| Arsenium, As² | < 10 | |
| Cadmium, Cd² | 0.87 | 1.04 |
| Lead, Pb² | 23 | 38.5 |
| Mercury, Hg⁴ | 1.4 | 1.34 |

| | | |
|---|---|---|
| ¹Inductively coupled plasma - atomic emission detector (ICP-AES) ²Graphite furnace for atomic absorption spectroscopy (GFAAS) ³Flame atomic absorption spectroscopy (FAAS) ⁴Cold vapour atomic absorption spectroscopy (CVAAS) ⁵Finnish Environment Institute database (Vahti) 1997 | | |

### Gasification tests

Due to the large content of fines (app. 50 weight-%) and low bulk density of the dried and crushed sludge the required feeding (volume) rate of the sludge was significantly higher compared to typical biofuels.

A total of 13 successful tests were carried out with the bench-scale gasifier. The test conditions are presented in Table 3. Air was used as a gasification agent. Steam was added to the primary air in most of the tests. The following operation parameters were varied in the tests:
- Gasification temperature
- Fluidisation velocity
- Bed material
- Steam in fluidising air
- Feedstock

**Table 3. The main gasification parameters in the bench-scale tests.**

| **Test** | **Feedstock** | **Bed material Sand/Limestone** Wt-% | **Gasification agents** | **Gasification temperature °C** | **Fluidisation velocity** m/s |
|---|---|---|---|---|---|
| **Test-01** | Dried sludge 1 | 50/50 | Prim. air + steam 15% | 850 | 0.5 |
| **Test-02** | Dried sludge 2 | 50/50 | Prim. air + steam 10% | 850 | 0.5 |
| **Test-03** | Dried sludge 2 | *Interrupted* | - | - | - |
| **Test-04** | Dried sludge 2 | 50/50 | Prim. air + steam 10% | 840 | 0.4 |
| **Test-05** | Dried sludge 2 | 100/0 | Prim. air + steam 10% | 850 | 0.4 |
| **Test-06** | Dried sludge 2 | 50/50 | Prim. air + steam 0% | 840 | 0.4 |
| **Test-07** | Dried sludge 2 | 50/50 | Prim. air + steam 10% | 840 | 0.4 |
| **Test-08** | Dried sludge 2 | 50/50 | Prim. air + steam 10% | 800 | 0.4 |
| **Test-09** | Dried sludge 3 | 50/50 | Prim. air + steam 10% | 750 | 0.4 |
| **Test-10** | Dried sludge 2 | 50/50 | Prim. air + steam 10% | 700 | 0.4 |
| **Test-11** | Dried sludge3 / wood chips * | 100/0 | Prim. air + steam 10% | 850 | 0.4 |
| **Test-12** | Dried sludge3 / wood chips * | 50/50 | Prim. air + steam 10% | 780 | 0.4 |
| **Test-13** | Dried sludge3 / wood chips * | 50/50 | Prim. air + steam 10% | 800 | 0.4 |
| **Test-14** | Dried sludge3 / wood chips * | 50/50 | Prim. air + steam 10% | 840 | 0.4 |

| | | | | | |
|---|---|---|---|---|---|
| * Dried sludge (50 %) and wood chips (50 %) | | | | | |

During the tests CO, H₂, CH₄, CO₂ and O₂ were monitored by on-line analysers. Additionally, in several tests the gas phase measurements included some or all of the following: tars, ammonia (NH₃) and hydrogen cyanide (HCN), hydrogen sulphide (H₂S) and carbonyl sulphide (COS), hydrocarbons (C₁-C₅). Phosphorus was measured only in test 2 by GC-AED.

### Results

The bench-scale tests succeeded extremely well. The main results are presented in the following.

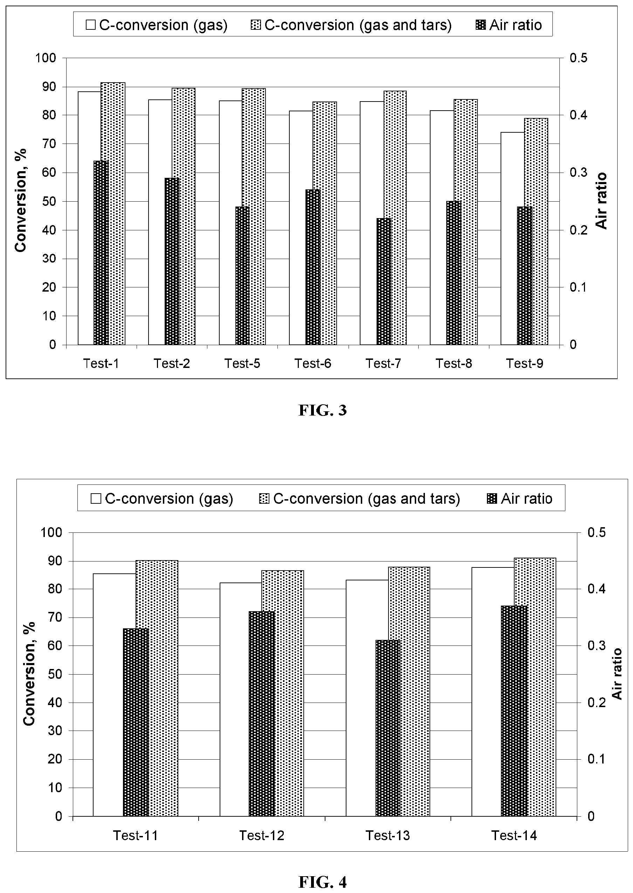

The reactivity of the sludge appeared to be very high. The carbon conversion was about 90% in most of the tests. The carbon conversion and air ratio in the tests are presented in Figure 3 (dried sludge) and Figure 4 (dried sludge/wood).

The ammonia content of the product gas was high, especially when using only dried sludge as feedstock. This was expected, as nitrogen content of the dried sludge was 2-3%. When using the mixture of dried sludge and wood as feedstock the measured ammonia concentrations were lower due to the dilution effect of wood. The average nitrogen content of the mixture of dried sludge and wood was 1.6%.

The sulphur content of the dried sludge varied between 0.6 and 1.0%. The sulphur content of the mixture of dried sludge and wood was 0.45%.

Gas phase phosphorus compounds were also analysed but no compounds were detected. The detection limit of the GC-AED was 90 ng/dm³.

### Example 3. Process Development Unit (PDU) -scale circulating fluidized bed gasification

The bench-scale tests indicated that fluidised bed gasification is a very potential option for energy utilisation of sewage sludge. In addition, the bench-scale tests showed that dried sewage sludge can be gasified as such. The successful bench-scale tests encouraged gasifying the dried sludge as such also in PDU-scale. The tests in PDU- scale were carried out with circulating fluidised bed gasifier (CFB). The operating conditions in the PDU-scale tests were defined based on the bench-scale test results.

### Test facilities

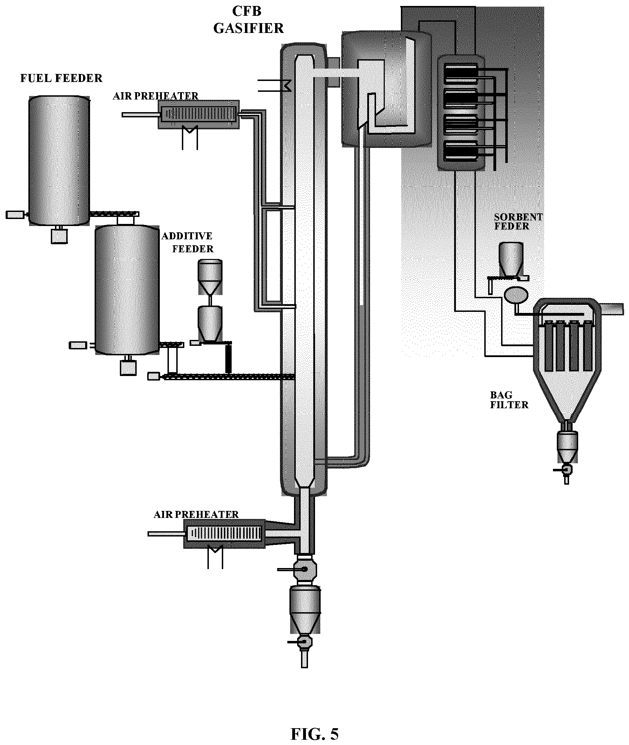

The tests were carried out with atmospheric-pressure Circulating Fluidized-Bed (CFB) gasification Process Development Unit (PDU) at VTT Processes. A schematic figure of the test rig is shown in figure 5. The key dimensions and the technical data of the test rig are presented in Table 4. The test rig is equipped with feedstock hoppers of live-bottom type suitable for low-bulk-density fuels and with lock hopper type of feeder for coal or pellets.. The fuel feeding point is located approximately 2 m above the air distributor, while the recycling material from the cyclone is introduced close to the distributor.

The gasification air is electrically preheated and can be divided into primary fluidisation air, as well as secondary and tertiary air feeds. Steam can be added to the fluidisation air. Only primary air and steam were used in these tests.

The gasifier reactor tube, the recycling cyclone and the recycling line are electrically heated in order to minimise heat losses, which otherwise would be very high due to the small size of the test rig. The use of electrical heaters together with rather high circulation rates makes it possible to maintain relatively uniform temperature distribution over the whole reactor. The temperature of the electrical heaters is tried to be set so that the gasification would be as close to adiabatic operation as possible.

The product gas is cleaned in the recycling cyclone followed by a gas cooler and a bag filter. Gas cooling has an important role in gas cleaning. Each of the zones is equipped with independent steam blowing systems to remove dust and other loosely bound impurities/deposits.

All the tests were carried out with high temperature bag filter. Bag filter consists of one-meter long advanced filter bags capable to operate at maximum 500 C. Bag filter unit is designed for low filtration velocity because the maximum pressure drop of filter bags is limited to about 20 mbar. Filter can be operated at wide temperature range and therefore the capacity of the filter is defined on the basis of maximum gas flow.

The gas cleaning section is also equipped with sorbent feeding port. Injection port is located just prior to the bag filter. Sorbent injection is applied in chlorine removal process. In these tests sorbent injection was not in use.

**Table 4. Technical data on the CFB gasification test rig of VTT Processes.**

| | |
|---|---|
| Reactor diameter | 154 mm |
| Reactor height | 7.9 m |
| Operation temperature | 600 - 1 000°C |
| Superficial gas flow rate in the reactor | 1 - 5 m/s |
| Operation pressure | 1.0 - 1.3 bar (abs) |
| Maximum fuel feed rate | 80 kg/h |
| Maximum thermal capacity | about 350 kW |
| Gas cleaning equipment | 2 cyclones |
| | ceramic candle filter (12 elements) |
| | bag filter (max. 16 bags) |
| Research applications | Gasification, combustion, heat treatment |

The test rig is equipped with an automatic data collection of temperatures and pressures measured at different locations. In addition, the flow rates of gasification agents (air, steam, purging nitrogen) are continuously measured and recorded.

The main gas constituents, CO, H₂, CH₄, CO₂, were monitored by on-line analysers. In addition, the contents of hydrocarbon components including C₂Hₓ-C₅H_{y} were analysed by process gas chromatography.

### Feedstocks

Two different sludge feedstocks were used in the PDU-scale CFB gasification tests:
- Digested and thermally dried sewage sludge (test week CFB 1), which was used also as feedstock in the bench-scale tests
- Composted sewage sludge containing wood additive (test week CFB 2).

The composition of the sludge materials is presented in Table 5.

**Table 5. Average composition of feedstocks used in gasification test runs CFB 1 and CFB 2.**

| **Feedstock** | **Thermally dried sludge** | | **Composted sludge containing wood** | | |
|---|---|---|---|---|---|
| **Test** | **CFB 1A** | **CFB 1B** | **CFB 2A** | **CFB 2B** | **CFB 2C** |
| Moisture content, wt-% | 12.7 | 18.9 | 25.9¹ | 33.1¹ | 31.7¹ |
| wt-% (d.b.) | | | | | |
| Ash | 49.1 | 49.1 | 27 | 26.9 | 25.5 |
| Fixed carbon | 2.2 | 2.1 | 12.4 | 11.9 | 12.7 |
| Volatile matter | 48.7 | 48.8 | 60.6 | 61.2 | 61.8 |
| wt-% (d.b.) | | | | | |
| C | 25.1 | 24.3 | 36.9 | 37.3 | 37.7 |
| H | 3.3 | 3.1 | 4.8 | 4.8 | 4.8 |
| N | 2.9 | 2.9 | 2.9 | 2.8 | 2.7 |
| S | 0.75 | 0.74 | 0.75 | 0.74 | 0.74 |
| O (as difference) | 68.0 | 69.0 | 54.7 | 54.4 | 54.1 |
| Cl wt-%(d.b.) | nd² | nd² | 0.22 | 0.20 | 0.23 |

| | | | | | |
|---|---|---|---|---|---|
| ¹ Average of several samples ² nd =not determined | | | | | |

Digested and thermally dried sludge was used without any additional feedstock in PDU-scale gasifier during the test run CFB 1. After the digestion process the sludge had been granulated and dried thermally on belt drier. Dried sludge was delivered to VTT in granulated form.

Thermally dried sludge was relatively homogeneous except the moisture content, which varied in some degree. The moisture content of dried sludge used in the bench-scale tests had been below 10% but the moisture content of sludge used in the PDU-scale CFB tests was higher, 12.7 - 18.9%. The ash content of the sludge was high, almost 50%, and respectively carbon content low, approximately 25%. The energy content of the feedstock was poor. Nitrogen content of the feedstock was high, almost 3%, causing a risk for high ammonia and hydrogen cyanide concentrations in the product gas. Also the sulphur content of the sludge was relatively high, which may result in high hydrogen sulphide concentration in the product gas.

The composted sewage sludge containing wood additive was used as feedstock in the test run CFB 2. The sludge was composted in an industrial tunnel composting plant using wood chips as an additive. Sludge was mixed with wood chips before feeding into composting tunnel. After the tunnel composting process the composted sludge/wood mixture was delivered to VTT.

### Gasification tests

The targets were to gather data on product gas composition and gaseous impurities as well as to estimate the technical feasibility of the process when using only sludge as feedstock. The main operation parameters, which were varied between the tests, were gasification temperature and the feeding rate and the ratio of bed material. Bed material consisted of sand and limestone P3. The operating conditions at the gasification tests are presented in Table 6.

Digested and thermally dried sewage sludge was used as feedstock in the test week 1 and composted sewage sludge containing wood additive in the test week 2. During the test weeks the reactor was kept heated overnight. The used bed material of the previous day was used as start bed in the following day to quicken the start-up phase. Due to high ash content of the feedstocks the mass flow rates of bottom ash and filter dust were assumed to be significantly larger than when using typical biofuels. For this reason the feed rate of the bed sand was kept as low as possible. The tests were started, however, with moderate sand feed rate in order to avoid the risk of bed sintering. The ash from the feedstock accumulated in the bed and replaced a part of sand. The feed rate of bed material was lowered during the test weeks when no sintering in bed had been detected.

**Table 6. CFB gasification tests carried out during the test weeks CFB 1 and CFB 2.**

| **Test** | **Date** | **Duration¹ h** | **Feedstock** | **Bed material²** | **Gasification temperature³ °C** | **Gas cleaning** |
|---|---|---|---|---|---|---|
| CFB 1A | 04.06.02 | 5.25 | Thermally dried sludge | P3 50 % + Sand 50 % | 850 | Bag filter, 400 °C |
| CFB 1B | 06.06.02 | 4 | Thermally dried sludge | P3 100 % | 810 | Bag filter, 400 °C |
| CFB 2A | 14.10.02 | 3.25 | Composted sludge containing wood | P3 50 % + Sand 50% | 880 | Bag filter, 350 °C |
| CFB 2B | 15.10.02 | 6 | Composted sludge containing wood | P3 62 % + Sand 38% | 850 | Bag filter, 350 °C |
| CFB 2C | 16.10.02 | 6 | Composted sludge containing wood | P3 75 % + Sand 25% | 880 | Bag filter, 350 °C |

| | | | | | | |
|---|---|---|---|---|---|---|
| ¹ Duration of the steady-state set point period ² P3 = Parfil 3 limestone ³ Average temperature at the bottom/top of the riser | | | | | | |

### Results

The target of these tests was to attain basic data on features relating to the fluidised bed gasification of sewage sludge. This included data on gasification behaviour of the feedstock, the quality of the product gas, carbon conversion and concentration of gaseous impurities. The main operating parameters, which were varied during the test weeks, were gasification temperature and the use of the bed material.

The operating conditions and the main results of the process measurements in test run CFB 1 are presented in Table 7.

The results of the test week 1 corresponded relatively well to the results attained in the bench-scale tests. The solid output mass flows (bottom ash and filter dust) were significantly higher than when using typical biofuels. This was due to the high ash content of the dried sludge (almost 50%). The mass flow rate of the bottom ash was approximately 1.5 g/s and filter dust approximately 7 g/s. No remarkable sintering or deposit formation was detected during the test run or after it.

The feedstock was very reactive. The carbon conversion to product gas and tars (including limestone C in the input of carbon) at the test week 02/23 was high.

In test 1A the gasification temperature was 850 C and the bed material was mixture of sand and limestone (ratio 1:1). The carbon conversion in test 1A was 93,1%. The feeding of sand was stopped before test 1B, because no sign of bed sintering had been observed during test 1A. In test 1B the gasification temperature was 810 °C and the ash of the feedstock accumulated in bed and replaced sand as bed material. The temperature change did not affect remarkably to the product gas quality. The tar content of the product gas did not increase, most likely due to the increased limestone feed to the gasifier. All limestone (CaCO₃) did not calcinate (decompose) in the gasifier to calcium oxide (CaO) in test 1B due to the abundant limestone feed and low gasification temperature. Some unreacted limestone accumulated in bed (bottom ash) reducing the carbon conversion of test 1B (88.3%).

**Table 7. Results of the process measurements in the tests carried out during the test run CFB 1.**

| **Test** | **CFB 1A** | **CFB 1B** | |
|---|---|---|---|
| Fuel | Thermally dried sludge | Thermally dried sludge | |
| Bed material ¹ | P3 50 % + S 50 % | P3 100% | |
| Bed material feed rate, mg/s | 0.28 | 0.88 | |
| T (riser bottom), ^{°}C | 850 | 810 | |
| T (riser top), ^{°}C | 830 | 790 | |
| Pressure, bar (abs) | 1.1 | 1.1 | |
| Fuel moisture content, wt-% | 12.7 | 18.9 | |
| Fuel feed rate, g/s | 17.5 | 20.06 | |
| Gasification agents, g/s | | | |
| - primary air | 15.79 | 15.77 | |
| - steam | 1.44 | 1.45 | |
| Air ratio | 0.32 | 0.32 | |
| Dry gas composition, vol-% | | | |
| CO | 7.76 | 6.96 | |
| CO₂ | 17.81 | 18.49 | |
| H₂ | 15 | 15.86 | |
| N₂(+Ar) | 54.39 | 53.64 | |
| CH₄ | 2.44 | 2.37 | |
| C₂H_{y} | 1.31 | 1.22 | |
| C₃H_{y} - C₅H_{y} | 0.11 | 0.22 | |
| NH₃ | 1.11 | 1.16 | |
| HCN ppmₘ | 260 | 350 | |
| H₂S ppmₘ | 610 | 670 | |
| COS ppmₘ | 32 | 41 | |
| H₂O in wet gas gas, vol-% | 20 | 24 | |
| Tars + benzene, g/m³ₙ | 10.73 | 11.05 | |
| Tar yield, g/kg daf fuel | 28.16 | 20.48 | |
| Carbon conversion, wt-% | | | |
| | to dry gas | 88.3 | 86.7 |
| | to gas and tars | 93.5 | 90.6 |
| | to gas and tars ² | 93.1 | 88.3 |
| Mass balance closures | | | |
| | C-balance | 1.00 | 1.01 |
| | O-balance | 1.00 | 0.96 |
| | Ash balance | 1.07 | 0.99 |

| | | | |
|---|---|---|---|
| 1 P3=Limestone Parfil 3, S= silica sand 2 Including limestone C in the input of carbon | | | |

The operating conditions and the main results of the process measurements in test run CFB 2 are presented in Table 8.

The feedstock at the test week 2 was composted sewage sludge containing wood additive. No additional feedstock was used.

The carbon conversion to product gas and tars (including limestone C in the input of carbon) was approximately 90% in every test. No sign of blocking was observed during the test week. The test rig was inspected after the test week and no notable deposit was found.

Test 2A was carried out at the gasification temperature 880 ^{°}C. The feed ratio of sand and limestone was 1:1. In test 2B the gasification temperature was decreased to 850 ^{°}C, the feed rate of sand was diminished and the feed rate of limestone increased (sand limestone ratio 1:2). The product gas quality did not change remarkably. The tar content of the product gas increased slightly. In test 2C the gasification temperature was the same as in test 2A (880 ^{°}C) but the feed rate of sand was lower and the feed rate of limestone higher. The feed ratio of sand and limestone was thus 1:3. The moisture content of the feedstock used in test 2C was higher than in test 2A.

Two reasons led to a higher air ratio in test 2C than in test 2A. The moisture content of the sludge/wood mixture was higher in test 2C. In addition, the higher feed rate of limestone consumed more energy due to the calcination of limestone.

The higher air ratio caused lower heating value of the product gas in test 2C than 2A. The tar content in the product gas was clearly lower in test 2C than in test 2A due to the higher air ratio and higher feed rate of limestone.

**Table 8. Results of the process measurements in the tests carried out during the test run CFB2**

| **Test** | | **CFB 2A** | **CFB 2B** | **CFB 2C** |
|---|---|---|---|---|
| Fuel | | Composted sludge containing wood | Composted sludge containing wood | Composted sludge containing wood |
| Bed material ¹ | | P3 50 % + S 50 % | P3 62 % + S 38 % | P3 75 % + S 25 % |
| Bed material feed rate, mg/s | | 1.03 | 1.00 | 1.5 |
| T (riser bottom), °C | | 879 | 851 | 881 |
| T (riser top), °C | | 865 | 840 | 869 |
| Pressure, bar (abs) | | 1.1 | 1.1 | 1.1 |
| Fuel moisture content, wt-% | | 25.9 | 33.1 | 31.7 |
| Fuel feed rate, g/s | | 14.0 | 14.2 | 13.6 |
| Gasification agents, g/s | | | | |
| - primary air | | 15.0 | 15.6 | 16.1 |
| - steam | | 1.0 | 1.3 | 1.3 |
| Air ratio | | 0.31 | 0.34 | 0.36 |
| Dry gas composition, vol-% | | | | |
| CO | | 9.18 | 8.16 | 7.88 |
| CO₂ | | 17.5 | 17.6 | 17.5 |
| H2 | | 11.96 | 9.85 | 9.99 |
| N₂(+Ar) | | 55.7 | 59.0 | 59.5 |
| CH₄ | | 2.89 | 2.60 | 2.45 |
| C₂H_{y} | | 1.40 | 1.42 | 1.27 |
| C₃H_{y} - C₅H_{y} | | 0.04 | 0.09 | 0.06 |
| NH₃ | | 1.28 | 1.22 | 1.25 |
| HCN ppmₘ | | 279 | 296 | 199 |
| H₂S ppmₘ | | 630 | 850 | 890 |
| COS ppmₘ | | 44 | 110 | 120 |
| H₂O in wet gas gas, vol-% | | 26.1 | 31.7 | 30.0 |
| Tars + benzene, g/m³ₙ | | 12.3 | 12.4 | 10.1 |
| Tar yield, g/kg daf fuel | | 30.8 | 33.1 | 27.4 |
| Carbon conversion, wt-% | | | | |
| | to dry gas | 86.3 | 87.9 | 87.9 |
| | to gas and tars | 91.9 | 93.8 | 92.9 |
| | to gas and tars ² | 90.5 | 91.9 | 89.5 |
| Mass balance closures | | | | |
| | C-balance | 1.00 | 1.00 | 1.00 |
| | O-balance | 1.02 | 1.01 | 0.98 |
| | Ash balance | 0.97 | 1.00 | 0.95 |

| | | | | |
|---|---|---|---|---|
| 1 P3=Limestone Parfil 3, S= silica sand 2 Including limestone C in the input of carbon | | | | |

### CITATION LIST

### Patent literature

1. WO 2014/094162
2. US 2014/0033776
3. CN 105670656

### Non-patent literature:

1. Soerensen, B. L. et al., Environmental and resource implications of phosphorus recovery from waste activated sludge, Waste Management 45 (2015), pp. 391-399.

## Claims

1. A method for recovering nutrients and energy from a sewage sludge and/or animal manure feedstock, **characterized in that** the method includes the steps of:
- dewatering of the sewage sludge and/or animal manure,
- condensing and stripping evaporated water from the dewatering step to recover nitrogen as ammonia,
- thermal gasification of the dewatered sewage sludge and/or animal manure at temperature of 600-900 °C to produce gaseous and solid fractions comprising phosphorus and nitrogen as ammonia,
- cooling of the gas and recovering heat, and
- cleaning of the gas by filtration to recover phosphorus, and by scrubbing to provide a scrubbing liquid, from which nitrogen as ammonia is stripped, and cleaned fuel gas for further utilization,
wherein total carbon conversion from the feedstock to product gas and tars is at least 80%.

2. The method according to claim 1, **characterized in** dewatering of the sewage sludge and/or animal manure into water content below 25 wt-%, preferably with heated air.

3. The method according to claim 1 or 2, **characterized in that** the thermal gasification is carried out at temperature of 700-850 °C, after which the produced gas is cooled down to temperature of 300-500 °C, more preferably 350-450 °C, after which the cooled gas is filtrated and scrubbed for recovery of phosphorus, nitrogen and cleaned fuel gas.

4. The method according to any preceding claims, **characterized in that** the gas filtration provides an ash fraction containing the phosphorus, which is utilized as such or recovered from the ash by means of hydrometallurgy or extraction.

5. The method according to any preceding claims, **characterized in that** the phosphorus is recovered from bottom ash generated in the thermal gasification step and from fly ash generated in the gas filtration step.

6. The method according to any of the preceding claims, **characterized in that** the produced gas is cleaned by means of scrubbing with a liquid comprising formic acid, providing cleaned fuel gas and a scrubbing liquid, from which nitrogen as ammonia is stripped.

7. The method according to any of the preceding claims, **characterized in** collecting the other solid products than phosphorus from the thermal gasification for further processing and utilization or for disposal as a safe inert residue.

8. The method according to any of the preceding claims, **characterized in** recovering at least 90%, preferably at least 95%, and most suitably at least 98% of the nitrogen as ammonia contained in the produced gasification gas.

9. The method according to any of the preceding claims, **characterized in that** the total carbon conversion is at least 90%.

10. The method according to any preceding claims, **characterized in that** the thermal gasification is carried out by fluidized bed gasification, such as bubbling fluidized bed gasification (BFB) or circulating fluidized bed gasification (CFB).

11. A method for producing a fertilizer comprising at least nitrogen and phosphorus, **characterized in that** the recovered nitrogen and phosphorus from the method of any of claims 1 to 10 are transported into a fertilizer production unit, wherein the fertilizer is produced by mixing together at least the recovered nitrogen and phosphorus at desired nitrogen/phosphorus ratio.

## Patentansprüche

1. Verfahren zur Rückgewinnung von Nährstoffen und Energie aus einem Klärschlamm und/oder Tierdungrohstoff, **dadurch gekennzeichnet, dass** das Verfahren die folgenden Schritte beinhaltet:
- Entwässern des Klärschlamms und/oder Tierdungs,
- Kondensieren und Strippen von verdampftem Wasser aus dem Entwässerungsschritt, um Stickstoff als Ammoniak rückzugewinnen,
- thermische Vergasung des entwässerten Klärschlamms und/oder Tierdungs bei einer Temperatur von 600-900 °C, um gasförmige und feste Fraktionen zu erzeugen, die Phosphor und Stickstoff als Ammoniak umfassen,
- Kühlen des Gases und Rückgewinnen von Wärme, und
- Reinigen des Gases durch Filtration, um Phosphor rückzugewinnen, und durch Waschen, um Waschflüssigkeit, aus der Stickstoff als Ammoniak gestrippt wird, und gereinigtes Brenngas zur weiteren Verwendung bereitzustellen,
wobei die Gesamtkohlenstoffumwandlung vom Rohstoff zu Produktgas und Teeren mindestens 80% beträgt.

2. Verfahren nach Anspruch 1, **gekennzeichnet durch** Entwässern des Klärschlamms und/oder Tierdungs zu einem Wassergehalt unter 25 Gew.-%, bevorzugt mit Heißluft.

3. Verfahren nach Anspruch 1 oder 2, **dadurch gekennzeichnet, dass** die thermische Vergasung bei einer Temperatur von 700-850 °C durchgeführt wird, wonach das erzeugte Gas auf eine Temperatur von 300-500 °C, bevorzugter 350-450 °C, abgekühlt wird, wonach das abgekühlte Gas filtriert und zur Rückgewinnung von Phosphor, Stickstoff und gereinigtem Brenngas gewaschen wird.

4. Verfahren nach einem der vorstehenden Ansprüche, **dadurch gekennzeichnet, dass** die Gasfiltration eine den Phosphor enthaltende Aschefraktion bereitstellt, die als solche verwertet oder mittels Hydrometallurgie oder Extraktion aus der Asche rückgewonnen wird.

5. Verfahren nach einem der vorstehenden Ansprüche, **dadurch gekennzeichnet, dass** der Phosphor aus der in dem thermischen Vergasungsschritt generierten Bodenasche und aus der in dem Gasfiltrationsschritt generierten Flugasche rückgewonnen wird.

6. Verfahren nach einem der vorstehenden Ansprüche, **dadurch gekennzeichnet, dass** das erzeugte Gas mittels Waschen mit einer Ameisensäure enthaltenden Flüssigkeit gereinigt wird, wobei gereinigtes Brenngas und eine Waschflüssigkeit, aus der Stickstoff als Ammoniak gestrippt wird, bereitgestellt werden.

7. Verfahren nach einem der vorstehenden Ansprüche, **gekennzeichnet durch** Sammeln der anderen festen Produkte als Phosphor aus der thermischen Vergasung zur weiteren Verarbeitung und Nutzung oder zur Entsorgung als einen sicheren inerten Rückstand.

8. Verfahren nach einem der vorstehenden Ansprüche, **gekennzeichnet durch** Rückgewinnen von mindestens 90%, bevorzugt mindestens 95%, und am geeignetsten mindestens 98% des Stickstoffs als Ammonium, das in dem erzeugten Vergasungsgas enthalten ist.

9. Verfahren nach einem der vorstehenden Ansprüche, **dadurch gekennzeichnet, dass** die Gesamtkohlenstoffumwandlung mindestens 90% beträgt.

10. Verfahren nach einem der vorstehenden Ansprüche, **dadurch gekennzeichnet, dass** die thermische Vergasung durch Wirbelschichtvergasung, wie blubbernde Wirbelschichtvergasung (BFB) oder zirkulierende Wirbelschichtvergasung (CFB), durchgeführt wird.

11. Verfahren zur Erzeugung eines Düngemittels, das mindestens Stickstoff und Phosphor umfasst, **dadurch gekennzeichnet, dass** der rückgewonnene Stickstoff und Phosphor aus dem Verfahren nach einem der Ansprüche 1 bis 10 in eine Düngemittelproduktionseinheit transportiert werden, wobei das Düngemittel durch Zusammenmischen von mindestens dem rückgewonnenen Stickstoff und Phosphor in einem gewünschten Stickstoff/Phosphor-Verhältnis erzeugt wird.

## Revendications

1. Procédé de récupération de nutriments et d'énergie à partir de boues d'épuration et/ou d'une matière première de fumier animal, **caractérisé en ce que** le procédé inclut les étapes suivantes :
- la déshydratation des boues d'épuration et/ou du fumier animal,
- la condensation et l'élimination d'eau évaporée issue de l'étape de déshydratation pour récupérer l'azote sous forme d'ammoniac,
- la gazéification thermique des boues d'épuration et/ou du fumier animal déshydraté(es) à une température de 600 à 900 °C pour produire des fractions gazeuses et solides comprenant du phosphore et de l'azote sous forme d'ammoniac,
- le refroidissement du gaz et la récupération de chaleur, et
- l'épuration du gaz par filtration pour récupérer le phosphore, et par lavage pour fournir un liquide de lavage, duquel l'azote sous forme d'ammoniac est éliminé, et du gaz combustible épuré pour une utilisation ultérieure,
dans lequel la conversion totale de carbone de la matière première en gaz produit et en goudrons est d'au moins 80 %.

2. Procédé selon la revendication 1, **caractérisé par** la déshydratation des boues d'épuration et/ou du fumier animal dans une teneur en eau inférieure à 25 % en poids, de préférence avec de l'air chauffé.

3. Procédé selon la revendication 1 ou 2, **caractérisé en ce que** la gazéification thermique est effectuée à une température de 700 à 850 °C, après quoi le gaz produit est refroidi à une température de 300 à 500 °C, plus préférentiellement de 350 à 450 °C, après quoi le gaz refroidi est filtré et lavé pour récupérer le phosphore, l'azote et le gaz combustible épuré.

4. Procédé selon une quelconque revendication précédente, **caractérisé en ce que** la filtration de gaz fournit une fraction de cendres contenant le phosphore, qui est utilisée telle quelle ou récupérée à partir des cendres au moyen d'hydrométallurgie ou d'extraction.

5. Procédé selon une quelconque revendication précédente, **caractérisé en ce que** le phosphore est récupéré à partir des cendres résiduelles générées dans l'étape de gazéification thermique et des cendres volantes générées dans l'étape de filtration de gaz.

6. Procédé selon l'une quelconque des revendications précédentes, **caractérisé en ce que** le gaz produit est épuré au moyen d'un lavage avec un liquide comprenant de l'acide formique, fournissant du gaz combustible épuré et un liquide de lavage, duquel l'azote sous forme d'ammoniac est éliminé.

7. Procédé selon l'une quelconque des revendications précédentes, **caractérisé par** la collecte des produits solides autres que le phosphore issus de la gazéification thermique pour un traitement et une utilisation ultérieurs ou pour une élimination en tant que résidu inerte sûr.

8. Procédé selon l'une quelconque des revendications précédentes, **caractérisé par** la récupération d'au moins 90 %, de préférence au moins 95 %, et de manière la plus appropriée au moins 98 % de l'azote sous forme d'ammoniac contenu dans le gaz de gazéification produit.

9. Procédé selon l'une quelconque des revendications précédentes, **caractérisé en ce que** la conversion totale de carbone est d'au moins 90 %.

10. Procédé selon l'une quelconque des revendications précédentes, **caractérisé en ce que** la gazéification thermique est effectuée par gazéification en lit fluidisé, telle que la gazéification en lit fluidisé bouillonnant (BFB) ou la gazéification en lit fluidisé circulant (CFB).

11. Procédé de production d'un engrais comprenant au moins de l'azote et du phosphore, **caractérisé en ce que** l'azote et le phosphore récupérés du procédé selon l'une quelconque des revendications 1 à 10 sont transportés dans une unité de production d'engrais, dans lequel l'engrais est produit en mélangeant ensemble au moins les azote et phosphore récupérés au rapport azote/phosphore souhaité.
